Europäisches Patentamt

European Patent Office

Office européen des brevets

(11) Veröffentlichungsnummer: **0 302 210 B1**

## (12) EUROPÄISCHE PATENTSCHRIFT

(45) Veröffentlichungstag der Patentschrift: **22.01.92**

(21) Anmeldenummer: **88110069.7**

(22) Anmeldetag: **24.06.88**

(51) Int. Cl.⁵: **A01F 12/30**, A01F 12/44

(54) **Reinigungsvorrichtung.**

(30) Priorität: **30.06.87 US 68072**

(43) Veröffentlichungstag der Anmeldung:
**08.02.89 Patentblatt 89/06**

(45) Bekanntmachung des Hinweises auf die
Patenterteilung:
**22.01.92 Patentblatt 92/04**

(84) Benannte Vertragsstaaten:
**BE DE FR IT**

(56) Entgegenhaltungen:
**EP-A- 0 197 292**
**DE-A- 2 101 711**
**US-A- 3 456 786**
**US-A- 4 270 551**

(73) Patentinhaber: **DEERE & COMPANY**
**1 John Deere Road**
**Moline, Illinois 61265(US)**

(72) Erfinder: **Reed, James Turner**
**3106 186th Street North**
**East Moline Illinois 61244(US)**
Erfinder: **Bruce, Alan Coers**
**509 Valley View Drive**
**Silvis Illinois 61282(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

## Beschreibung

Die Erfindung betrifft eine Reinigungsvorrichtung, insbesondere für eine fahrbare Erntemaschine, mit zwei Förderern, die gemeinsam einer zwischen beiden Förderern liegenden Öffnung zu reinigendes Gut zufördern, durch die hindurch es einer Reinigungseinheit beschleunigt aufgegeben wird.

Bei einer bekannten Reinigungsvorrichtung dieser Art wie sie zum Beispiel aus der US-A-3 456 786 bekannt ist, welche Druckschrift eine Vorrichtung mit den Merkmalen des Oberbegrifes des Anspruchs 1 zeigt, erstreckt sich ein Förderer von unterhalb einer Dreschtrommel eines Mähdreschers bis zu einem Siebkasten und ein zweiter Förderer unterhalb mehrerer Schüttler. Beide Förderer sind als Schwingförderer ausgebildet und derart angeordnet, daß sich gegenüberliegende Endbereiche geringfügig überlappen, aber dennoch zwischen sich einen Spalt belassen, durch den von den Förderern gefördertes Erntegut hindurch zu dem Siebkasten gelangen kann. Im Bereich dieser Öffnung befindet sich eine Beschleunigungswalze, die teilweise von einem Blech umgeben ist und das Erntegut auf seinem Weg zum Siebkasten schleudert. Dadurch wird der Erntegutstrom dünner und kann leichter von einem Luftstrom durchblasen und somit gereinigt werden.

Diese Reinigungsvorrichtung ist insoweit nachteilig, als zum Erreichen dieses Zwecks die Beschleunigungswalze und das Blech erforderlich sind, woraus erhebliche Kosten entstehen.

Die der Erfindung zugrunde liegende Aufgabe wird darin gesehen, eine Reinigungsvorrichtung zu schaffen, die ohne eine derartige Beschleunigungswalze eine beschleunigte Gutabgabe durchführt.

Diese Aufgabe ist erfindungsgemäß durch die Merkmale des Patentanspruchs 1 gelöst worden, wobei in den Unteransprüchen vorteilhafte Merkmale angegeben sind, die diese Lösung noch weiterbilden.

Auf diese Weise werden die Förderer selbst dazu benutzt, den Beschleunigungseffekt zu erzielen, was durch das Aufsetzen einfacher Leisten bewirkt wird. Die Verwendung endlos umlaufender Förderer, insbesondere von Förderbändern, führt außerdem zu einer gegenüber den Schwingförderern größeren Laufruhe.

Möwenflügelartig zusammengefügte Flügel, die die Förderer im Bereich der Öffnung teilweise umgeben, stellen sicher, daß das Fördergut gleichmäßig und in jedem Fall von den Leisten erfaßt wird, was bedeutet, daß kein Fördergut unbeschleunigt dem Luftstrom ausgesetzt wird.

Eine Vermischung beider Fördergutströme, die evtl. mit einer Verstopfungsneigung einherginge, wird vermieden, wenn die Flügel mit ihrer gemeinsamen Scheitellinie bis tief in die Öffnung hineinreichen.

Eine optimale Reinigung des Förderguts wird erreicht, wenn der Luftstrom quer auf den beschleunigten Fördergutstrom trifft, wobei zur Erhöhung der Relativgeschwindigkeit zwischen dem Luftstrom und dem Fördergutstrom letzterer der Richtung des Luftstroms entgegengerichtet werden kann. Dadurch wird die Reinigungswirkung erhöht.

Weitere Merkmale betreffen die Ausbildung des oder der Gebläse zum Bilden des Luftstromes, wobei verschiedene Lösungen für eine optimale Luftzuführung in die Reinigungsvorrichtung angegeben sind.

In der Zeichnung ist ein nachfolgend näher beschriebenes Ausführungsbeispiel der Erfindung dargestellt. Es zeigt:

Fig. 1     eine Erntemaschine mit einer erfindungsgemäßen Reinigungsvorrichtung in schematischer Darstellung und in Seitenansicht,

Fig. 2     einen Teilbereich der Reinigungsvorrichtung in vergrößerter Darstellung und

Fig. 3     ein Diagramm.

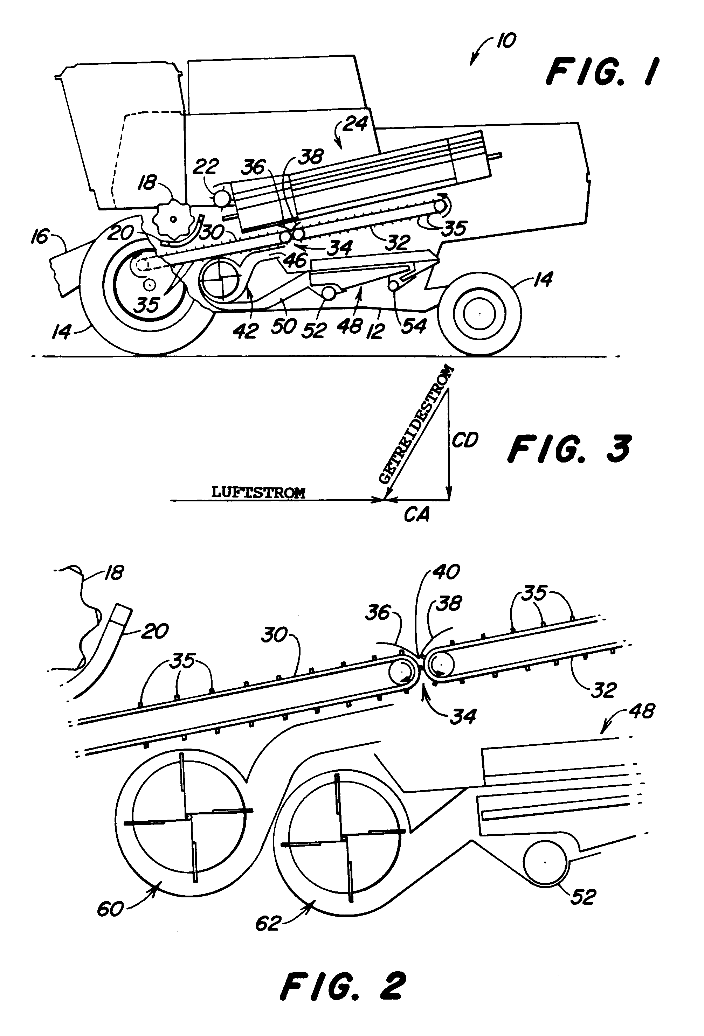

In Figur 1 ist eine Erntemaschine 10 in der Art eines Mähdreschers gezeigt, der einen Aufbau 12 mit diesen tragenden Rädern 14 enthält. Wenigstens zwei der Räder 14 werden von einem nicht gezeigten Antriebsaggregat aus angetrieben, um die Erntemaschine 10 über ein Feld zu bewegen. Am vorderen und in Figur 1 links gelegenen Endbereich der Erntemaschine 10 ist normalerweise ein Erntevorsatz angebracht, mit dem auf dem Feld stehendes Gut aufgenommen und einem Schrägförderer 16 zur Weiterleitung an eine Dresch- und Reinigungsvorrichtung aufgegeben wird. Diese Dresch- und Reinigungsvorrichtung setzt sich aus einer Dreschtrommel 18 und einem dieser zugeordneten Dreschkorb 20 zusammen, denen das Gut anfänglich zugeleitet wird. Das gedroschene Gut wird dann einer Wendetrommel 22 aufgegeben, von wo aus es in einen Axialabscheider 24 gelangt; eine ausführliche Beschreibung eines derartigen Axialabscheiders 24 findet sich in der US-A-4 574 815, deren Offenbarung hiermit ausdrücklich in diese Patentanmeldung mit einbezogen wird. Es ist jedoch wesentlich festzuhalten, daß die vorliegende Erfindung ebenfalls in einer Erntemaschine mit Schüttlern oder einer nur mit einer Axialdrescheinheit ausgerüsteten Erntemaschine verwendet werden kann. Aus dem bevorzugten Ausführungsbeispiel kann daher nicht auf eine Beschränkung der Anwendung der Erfindung nur bei einem derartigen Erntemaschinentyp geschlossen werden.

Getreide und Spreu (Kaff, Kurzstroh), das aus den Dreschund Abscheideelemente ausfällt, fällt auf endlose band- oder riemenartige Förderer 30 und 32. Diese Förderer 30, 32 belassen zwischen sich bzw. sie definieren zwischen sich eine Öffnung 34, durch die die Spreu hindurchtritt und dabei beschleunigt wird. Die Förderer 30, 32 bewegen sich in entgegengesetzter Richtung, wie es aus den Pfeilen in Figur 2 hervorgeht, und sind mit einer Anzahl sich quer erstreckender Leisten 35 ausgerüstet, die mit der Oberfläche des "Bandes" oder "Riemens" fest verbunden sind.

Die Leisten 35 dienen dazu, das Getreide (Körner) und die Spreu, die sich auf den Förderern 30, 32 befinden, nach unten durch die Öffnung 34 mitzunehmen und zu beschleunigen. Ein Teilerelement in der Form eines Möwenflügels ist über der Öffnung 34 vorgesehen und mit Flügeln 36, 38 versehen, die sich auf einer Scheitellinie 40 treffen und dort miteinander verbunden sind. Die Scheitellinie 40 befindet sich in der Öffnung 34 zwischen den beiden Förderern 30, 32, so daß die Flügel 36, 38 bis unterhalb der Leisten 35 des oberen Trums reichen. Da sich die Förderer 30, 32 bewegen, reichen die Leisten 35 bis an die Unterseiten der Flügel 36, 38 heran, aber sie berühren sie nicht. Die Flügel 36, 38 verhindern, daß das Getreide und die Spreu frei durch die Öffnung 34 fallen, ohne daß sie von den Leisten 35 beschleunigt werden.

Unmittelbar unterhalb des Förderers 30 befindet sich ein Gebläse 42, das mit einem Auslaßkanal 46 versehen ist, durch den ein Luftstrom gegen das durch die Öffnung 34 geworfene Getreide und die Spreu geführt wird. Das schwerere Getreide fällt auf eine Reinigungseinheit 48, wo es weiter behandelt wird. Hingegen wird die leichtere Spreu fort- und am Ende der Erntemaschine 10 hinausgeblasen. In Figur 1 ist eine Bauweise mit nur einem Gebläse 42 gezeigt, und dieses Gebläse 42 ist mit einem zweiten Kanal 50 versehen, durch den ein Luftstrom zu der Reinigungseinheit 48 geblasen wird. Die Reinigungseinheit 48 ist von herkömmlicher Bauart und führt die Getreidekörner zu einer Schnecke 52 für gereinigtes Getreide, während die Überkehr (unausgedroschene Ähren) einer Überkehrschnecke 54 aufgegeben wird.

Figur 3 ist zu entnehmen, daß es wünschenswert sein könnte, den Vektor der Relativgeschwindigkeit zwischen dem Luftstrom und dem Getreidestrom zu erhöhen. Nach dem Diagramm aus Figur 3 wird das Getreide und die Spreu nach unten und nach vorne in den Luftstrom geworfen. Daher wird das Getreide nicht einfach senkrecht zu dem Luftstrom geworfen, wie es der Vektor CD zeigt, sondern unter einem flachen Winkel, so daß die Geschwindigkeitskomponente CA des Getreidestroms in die dem Luftstrom entgegengesetzte Richtung zeigt.

In dem Ausführungsbeispiel gemäß Figur 2 ist ein System mit zwei Gebläsen 60, 62 benutzt, wobei das Gebläse 60 einen horizontal gerichteten Luftstrom gegen das Getreide und die Spreu, wie sie durch die Öffnung 34 geworfen werden, führt, während das Gebläse 62 benutzt wird, einen Luftstrom für die Reinigungseinheit 48 zu erzeugen.

**Patentansprüche**

1. Reinigungsvorrichtung, insbesondere für eine fahrbare Erntemaschine, mit zwei Förderern (30, 32), die gemeinsam einer zwischen beiden Förderern (30, 32) liegenden Öffnung (34) zu reinigendes Gut zufördern, durch die hindurch es einer Reinigungseinheit (48) beschleunigt aufgegeben wird, **und mit einem Gebläse (42),** dadurch gekennzeichnet, daß die Förderer (30, 32) endlos umlaufend ausgebildet und mit Leisten (35) zum Fördern und Beschleunigen des Guts durch die Öffnung (34) hindurch versehen sind und daß **ein von dem Gebläse (42) geförderter Luftstrom derart gerichtet ist, daß er** unterhalb der Öffnung (34) **den Fallweg des Guts schneidet**

2. Reinigungsvorrichtung nach Anspruch 1, dadurch gekennzeichnet, daß zwei möwenflügelartig zusammengefügte Flügel (36, 38) zum Einleiten des Guts in die Öffnung (34) vorgesehen sind.

3. Reinigungsvorrichtung nach Anspruch 2, dadurch gekennzeichnet, daß die beiden Flügel (36, 38) in einer Scheitellinie (40) zusammengefügt sind und die Scheitellinie (40) in der Öffnung (34) gelegen ist.

4. Reinigungsvorrichtung nach einem oder mehreren der vorherigen Ansprüche, dadurch gekennzeichnet, daß der Luftstrom zwischen der Öffnung (34) und der Reinigungseinheit (48) quer auf den Gutstrom gelenkt wird.

5. Reinigungsvorrichtung nach einem oder mehreren der vorherigen Ansprüche mit einem den Luftstrom erzeugenden Gebläse (42), dadurch gekennzeichnet, daß das Gebläse (42) zwei Ausgangskanäle (46, 50) aufweist, von denen einer einen Luftstrom unterhalb der Öffnung (34) leitet.

6. Reinigungsvorrichtung nach Anspruch 5, dadurch gekennzeichnet, daß das Gut unter einem stumpfen Winkel dem Luftstrom entgegengeschleudert wird.

7. Reinigungsvorrichtung nach einem oder mehreren der Ansprüche 1 bis 4, dadurch gekennzeichnet, daß zwei Gebläse (60, 62) vorgesehen sind, von denen das eine den Luftstrom unter die Öffnung (34) führt.

8. Reinigungsvorrichtung nach Anspruch 6 oder 7, dadurch gekennzeichnet, daß der zweite Auslaßkanal (50) bzw. das zweite Gebläse (62) einen Luftstrom für die Reinigungseinheit (48) leitet bzw. erzeugt.

## Claims

1. Cleaning device, especially for a mobile harvesting machine, with two conveyors (30, 32) which feed material to be cleaned in common to an opening (34) lying between the two conveyors (30, 32), through which opening it is delivered with acceleration to a cleaning unit (48), and with a blower (42), characterized in that the conveyors (30, 32) are of endless circulating form and are provided with strips (35) for conveying and accelerating the material through the opening (34) and in that an airstream supplied by the blower (42) is so directed that it intersects the path of fall of the material below the opening (34).

2. Cleaning device according to claim 1, characterized in that two blades (36, 38) converging like seagulls wings are provided for guiding the material into the opening (34).

3. Cleaning device according to claim 2, characterized in that the two blades (36, 38) are joined at an apex line (40) and the apex line (40) is located in the opening (34).

4. Cleaning device according to one or mare of the preceding claims, characterized in that the airstream between the opening (34) and the cleaning unit (48) is directed transversely to the flow of material.

5. Cleaning device according to one or more of the preceding claims, with one blower (42) generating the airstream, characterized in that the blower (42) has two outlet channels (46, 50), of which one feeds an airstream below the opening (34).

6. Cleaning device according to claim 5, characterized in that the material is thrown at an oblique angle against the airstream.

7. Cleaning device according to one or more of claims 1 to 4, characterized in that two blowers (60, 62) are provided, of which the one feeds the airstream below the opening (34).

8. Cleaning device according to claim 6 or 7, characterized in that the second outlet channel (50) or the second blower (60) feeds or generates an airstream for the cleaning unit (48).

## Revendications

1. Mécanisme de nettoyage, en particulier pour une moissonneuse mobile, comportant deux transporteurs (30, 32) qui amènent ensemble la matière à nettoyer vers une ouverture (34) située entre les deux transporteurs (30, 32), à travers laquelle elle est amenée, d'une façon accélérée, dans une unité de nettoyage (48), et comportant une soufflante (42), caractérisé en ce que les transporteurs (30, 32) sont réalisés à circulation sans fin et sont pourvus de nervures (35) pour transporter et accélérer la matière à travers l'ouverture (34), et en ce qu'un courant d'air transporté par la soufflante (42) est dirigé de telle manière qu'il coupe la trajectoire de chute de la matière au-dessous de l'ouverture (34).

2. Mécanisme de nettoyage selon la revendication 1, caractérisé en ce qu'il est prévu deux ailes (36, 38) réunies en forme d'aile de mouette pour introduire la matière dans l'ouverture (34).

3. Mécanisme de nettoyage selon la revendication 2, caractérisé en ce que les deux ailes (36, 38) se rejoignent suivant une ligne de crête (40), et la ligne de crête (40) est située dans l'ouverture (34).

4. Mécanisme de nettoyage selon une ou plusieurs des revendications précédentes, caractérisé en ce que le courant est dévié transversalement vers le flux de matière, entre l'ouverture (34) et l'unité de nettoyage (48).

5. Mécanisme de nettoyage selon une ou plusieurs des revendications précédentes, comportant une soufflante (42) produisant le courant d'air, caractérisé en ce que la soufflante (42) comporte deux canaux de sortie (46, 50) dont l'un dirige un courant d'air au-dessous de l'ouverture (34).

6. Mécanisme de nettoyage selon la revendication 5, caractérisé en ce que la matière est projetée suivant un angle obtus dans le sens opposé à celui du courant d'air.

7. Mécanisme de nettoyage selon une ou plusieurs des revendications 1 à 4, caractérisé en ce qu'il est prévu deux soufflantes (60, 62), dont l'une dirige le courant d'air au-dessous de l'ouverture (34).

8. Mécanisme de nettoyage selon la revendication 6 ou 7, caractérisé en ce que le deuxième canal de sortie (50) ou la deuxième soufflante (62), respectivement dirige ou produit respectivement, un courant d'air pour l'unité de nettoyage (48).

FIG. 1

FIG. 3

FIG. 2